# EUROPÄISCHE PATENTSCHRIFT

(11) **EP 0 539 744 B1**
(45) Veröffentlichungstag und Bekanntmachung des Hinweises auf die Patenterteilung: **04.12.1996**
(21) Anmeldenummer: 92116647.6
(22) Anmeldetag: 29.09.1992
(51) Int. Cl.: B29B 9/06

(54) **Verfahren und Vorrichtung zum Abkühlen und Granulieren von schmelzflüssig aus Düsen austretenden Strängen**
Method and apparatus for cooling and granulating melted extruded material
Méthode et appareil pour refroidir et granuler un matériau en fusion en sortie de filière

(30) Priorität: 08.10.1991 DE 4133329
(43) Veröffentlichungstag der Anmeldung: 05.05.1993
(73) Patentinhaber: Rieter Automatik GmbH, D-63757 Grossostheim (DE)
(72) Erfinder: Keilert, Jürgen, Dipl.-Ing. (FH), W-Kleinwallstadt (DE); Glöckner, Frank, Dipl.-Ing. (FH), W-8750 Aschaffenburg (DE)
(74) Vertreter: Bardehle, Heinz, Dipl.-Ing.

(56) Entgegenhaltungen:
- WO-A-90/07408
- WO-A-92/03270
- US-A- 4 180 539
- PATENT ABSTRACTS OF JAPAN vol. 13, no. 6 (M-781)(3354) 9. Januar 1989 & JP-A-63 216 710 (ISHINAKA TEKKOSHO K.K.)

## Beschreibung

Die Erfindung bezieht sich auf ein Verfahren zum Abkühlen und Granulieren von schmelzflüssig aus Düsen austretenden Strängen, die im Bereich nach den Düsen zunächst einer ersten Kühlung unterworfen und gestreckt und danach in einer Intensivkühlstrecke durch Kühlwasser abgeschreckt und für das nachfolgende Granulieren im wesentlichen durchgehärtet werden.

Ein derartiges Verfahren ist aus der JP-A 63 216 710 bekannt. Vorrichtungen zum Abkühlen und Granulieren von Strängen aus thermoplastischen Kunststoffen sind in verschiedenen Ausführungsformen bekannt geworden. So zeigt die DE-PS 25 03 455 eine Vorrichtung mit einer Ablaufrinne, über die ein Kühlwasserstrom geleitet wird, in den die aus Düsen austretenden Stränge hineinfließen. Weiterhin ist aus der DE-OS 2 230 187 eine Vorrichtung bekannt geworden, bei der die Führung der Stränge mittels zweier gegeneinander anliegender umlaufender Bänder erfolgt, in die die Stränge zusammen mit Kühlwasser eingeleitet werden. Diesen Vorrichtungen liegt das Prinzip zugrunde, die durch eine kurze Luftstrecke geführten Stränge, in der sie sich praktisch nicht abkühlen, schnell der Abschreckungswirkung von Kühlwasser auszusetzen und die Stränge von Kühlwasser umgeben zu den Einzugswalzen eines Granulators zu transportieren. Die Stränge gelangen dabei in einem Zustand in den Granulator, in dem sie wenigstens an ihrer Oberfläche verfestigt sind. Die Vorrichtungen können auch so gestaltet sein bzw. betrieben werden, daß eine durchgehende Verfestigung der Stränge beim Eintritt in den Granulator erreicht wird.

Es ist weiterhin aus der DE-PS 39 00 250 bekannt, eine mit Kühlwasser beschickte Ablaufrinne einer Vorrichtung zum Kühlen und Granulieren von Strängen in mehrere Zonen aufzuteilen, und zwar derart, daß zunächst wie bei der Vorrichtung gemaß der DE-PS 25 03 455 eine mit Kühlwasser beschickte Ablaufrinne vorgesehen ist, auf die eine Entwässerungsstrecke folgt, in der das die Ablaufrinne herabfließende Wasser weitgehend abgeleitet wird. Auf die Entwässerungsstrecke folgt dann eine Trocknungsstrecke, in der ein Gasstrom auf die Stränge geleitet wird, durch den an den Strängen noch anhaftendes Restwasser praktisch vollständig entfernt wird. Diese drei Zonen sind hintereinander im Rahmen der Ablaufrinne angeordnet, die nur in ihrem ersten, die Kühlflüssigkeit leitenden Bereich einen ausgeprägten Kühlungseffekt bewirkt.

Es ist auch aus der DE-AS 21 61 067 bekannt, Kunststoffstränge nach ihrem schmelzflüssigen Austreten aus Düsen zunächst zu verstrecken, wobei zwecks Verhinderung eines Anklebens der Stränge diese unmittelbar hinter den Düsen zunächst von einem Kühlwasserschwall oberflächlich abgekühlt werden. Danach werden dann die Stränge frei durch die Luft zu einer Einzugswalze geführt, die die Verstreckung der Stränge bewirkt. Anschließend erfolgt dann die Abkühlung der Stränge für das nachfolgende Granulieren. Die Verhinderung des Anklebens durch den Kühlwasserschwall mit nachfolgender freier Führung der Stränge durch die Luft führt nur zu einem rein oberflächlichen Erhärten der Stränge, so daß sich ein stark ungleichmäßiger Grad der Erhärtung über den Querschnitt der Stränge ergibt, was für das Verstrecken unerwünscht ist.

Es ist darüber hinaus aus DE-OS 36 23 157 bekannt, schmelzflüssig aus Düsen austretende Stränge von einem Transportband ohne Kühlung mitzunehmen, wobei die Stränge an dem Transportband ankleben sollen, damit das Transportband eine Zugwirkung auf die Stränge ausüben kann.

Schließlich sei noch auf die WO-92/03270 verwiesen, in der eine Vorrichtung zum Abkühlen und Granulieren von schmelzflüssig aus Düsen austretenden Strängen, insbesondere aus Kunststoffen offenbart ist, die mit einer unter den Düsen mit ihrem aufnahmeseitigen Ende angeordneten Transportrinne und einem der Transportrinne nachgeordneten Granulator versehen ist, wobei die Transportrinne im wesentlichen über ihre gesamte Länge als Lochblech ausgebildet ist, das den Durchtritt eines Gasstromes erlaubt, der die Stränge trägt und führt.

Der Erfindung liegt die Aufgabe zugrunde, ein Verfahren zum Abkühlen und Granulieren von schmelzflüssig aus Düsen austretenden Strängen zu schaffen, mit dem Kunststoffe verarbeitet werden können, die eine relativ hohe Wärmeleitfähigkeit besitzen, wozu insbesondere durch Fasern verstärkte Kunststoffe gehören. Faserverstärkte Kunststoffe werden wie unverstärkte Kunststoffe schmelzflüssig aus Düsen ausgetragen und anschließend granuliert.

Erfindungsgemäß wird das Problem dadurch gelöst, daß die Verstreckung der Stränge erfolgt, während diese längs einer Temperierstrecke, die als ein von Gas, insbesondere Luft, beaufschlagtes Fluidbett ausgebildet ist, unter Kompaktierung bis zum teigigen Zustand sanft gekühlt und der Zugwirkung des Einzugs der im wesentlichen durchgehärteten Stränge ausgesetzt werden.

Durch die Erfindung wird ein gegenüber den bisher üblichen Kühlverfahren für Kunststoffstränge grundsätzlich anderer Weg eingeschlagen, nämlich unter Vermeidung einer sofortigen schnellen Kühlung eine zunächst erfolgende sanfte Abkühlung, die unter Verstreckung durch die Zugwirkung des Einzugs in das Granulieren ein radiales Zusammenziehen des Kunststoffes im Sinne des Kompaktierens bewirkt, so daß das Kunststoffmaterial in einen Zustand überführt wird, in dem es bei folgender Abschreckung in der Intensivkühlstrecke sich praktisch nicht mehr deformiert. Dabei wird in der Temperierstrecke ein von Gas beaufschlagtes Fluidbett angewendet, das einerseits durch seine Wirkung des freien Tragens der Kunststoffstränge deren Ankleben verhindert und andererseits eine sanfte Kühlung bewirkt.

Die Intensivkühlstrecke wird vorteilhaft als mit Kühlwasser beaufschlagte Strangführung ausgebildet, wozu insbesondere die oben erwähnte Ablaufrinne aber auch die Strangführung mittels zweiter umlaufender Bänder in Frage kommt.

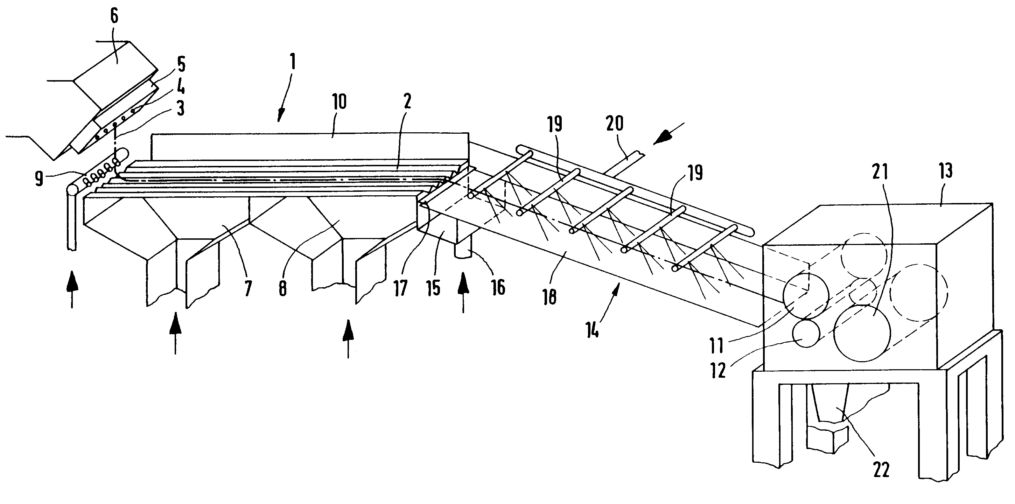

Ein Ausführungsbeispiel der Erfindung ist in der Figur dargestellt. Es zeigt eine Vorrichtung mit einem Fluidbett als Transportstrecke und einer Ablaufrinne als Intensivkühlstrecke.

Die in der Figur dargestellte Vorrichtung enthält das Fluidbett 1, das durch nebeneinander angeordnete Rillen 2 gebildet ist, die einzeln zur Führung von Strängen vorgesehen sind. Einer dieser Stränge ist in der Figur eingezeichnet und mit dem Bezugszeichen 3 versehen. Weitere Stränge sind aus Gründen der Übersichtlichkeit weggelassen. Die Stränge 3 treten aus Düsen 4 aus, die in einer Düsenplatte 5 eines Düsenkopfes 6 angeordnet sind. Bei der Anordnung des Düsenkopfes mit seinen Düsen handelt es sich um eine bekannte Gestaltung. Das Fluidbett 1 besteht im Bereich seiner Rillen 2 aus Siebmaterial, in das die Rillen 2 eingeprägt sind. Die Anordnung der Düsen 4 und der Rillen 2 ist so gestaltet, daß die Stränge 3 aus jeder Düse 4 jeweils in eine einzelne Rille 2 fallen und von dieser weitergeleitet werden. Unterhalb der Rillen 2 sind die beiden Gaszuführungsschächte 7 und 8 vorgesehen, die jeweils einen in Längsrichtung des eingezeichneten Pfeils verlaufenden Gasstrom führen, der von einem nicht dargestellten Gebläse jeweils geliefert wird. Das von den Gaszuführungsschächten 7 und 8 gelieferte Gas tritt durch das Siebmaterial der Rillen 2 aus und hebt damit die von den Rillen 2 geleiteten Stränge im Sinne der Wirkung eines Fluidbettes ab. Um den Strängen 3 schon vor ihrem Übergang in den Bereich der Rillen 2 eine Transportkomponente längs des Fluidbettes 1 zu geben, sind die Gasdüsen 9 vorgesehen, und zwar pro Rille 2 jeweils eine Gasdüse. Die Gasdüsen 9 blasen jeweils einen Gasstrom in die einzelnen Rillen 2 ein und sorgen dafür, daß die auf das Siebmaterial der Rillen 2 zufließenden Stränge 3 ohne Berührung mit dem Siebmaterial umgeleitet und längs der Rillen 2 getragen und geführt werden.

Das Fluidbett 1 enthält weiterhin an seinen Längsseiten Wände, von denen eine Wand 10 dargestellt ist. Die gegenüberliegende Wand ist aus Gründen der Übersichtlichkeit der Darstellung weggelassen.

Bei dem Fluidbett 1 handelt es sich um die eingangs erwähnte Temperierstrecke. Um den Effekt der sanften Kühlung mit der Temperierstrecke zu erzielen, sind die über die Luftzuführschächte 7 und 8 und die Düsen 9 zugeführten Gasströme soweit gegenüber der umgebenen Luft erhitzt, daß Ihre Temperatur z. B. bei der Verarbeitung von glasfaserverstärktem PA6.6 mit einem Schmelzpunkt von etwa 270° demgegenüber um etwa 100° abgesenkt ist, also bei etwa 170° liegt. Es ergibt dabei längs des Fluidbettes 1 eine Verstreckung der Kunststoffstränge 3 unter der Wirkung der später erläuterten Einzugswalzen 11 und 12 des Granulators 13 und gleichzeitig eine Kompaktierung der Kunststoffstränge 3, die schließlich am Ende des Fluidbettes 1 und damit der Temperierstrecke einen teigigen Zustand einnehmen, wobei sie längs der Temperierstrecke unter der Wirkung der im Fluidbett 1 zugeführten Gasströme sanft gekühlt werden.

Die Erwärmung des dem Fluidbett 1 zugeführten Gases erfolgt in bekannter Weise mittels elektrischer Heizer, die in geeigneter Weise regelbar sind.

Dem Fluidbett 1 als Temperierstrecke ist die Strangführung 14 nachgeordnet, die hier durch Beschickung mit Kühlwasser als Intensivkühlstrecke wirkt. Als Strangführung 14 wird hier eine solche gemäß der oben erwähnten DE-PS 25 03 455 verwendet. Die Strangführung 14 besitzt an ihrer dem Fluidbett 1 zugewandten Seite den Wasserkasten 15, dem in der eingezeichneten Pfeilrichtung über das Rohr 16 Kühlwasser zugeführt wird. Das Kühlwasser strömt aus der Schlitzdüse 17 gleichmäßig auf den Boden 18 der Strangführung 14 und bildet auf diesem einen ausreichend hohen Kühlwasserfilm für das im Bereich der Strangführung 14 erfolgende intensive Kühlen der Stränge 3. Oberhalb des Bodens 18 sind Spritzdüsen 19 vorgesehen, denen über den Zulauf 20 gemeinsam Kühlwasser zugeführt wird, das dann auf die längs des Bodens 18 geführten Stränge 3 gesprüht wird, so daß die Stränge 3 einer intensiven Kühlung unterworfen werden. Durch diese Intensivkühlung werden die Stränge bis zum Erreichen der Einzugswalzen 11 und 12 soweit gekühlt, daß sie im wesentlichen dort durchgehärtet für den Einzug in den Granulator 13 zur Verfügung stehen. Das Granulieren im Granulator 13 erfolgt dann in bekannter Weise mittels des prinzipiell dargestellten Rotors 21. Das von dem Rotor 21 geschnittene Granulat fällt dann durch den Abzugsschacht 22 entweder in einen Behälter oder auf ein nicht dargestelltes Förderband.

## Patentansprüche

1. Verfahren zum Abkühlen und Granulieren von schmelzflüssig aus Düsen (4) austretenden Strängen (3), die im Bereich nach den Düsen zunächst einer ersten Kühlung unterworfen und gestreckt und danach in einer Intensivkühlstrecke durch Kühlwasser abgeschreckt und für das nachfolgende Granulieren im wesentlichen durchgehärtet werden **dadurch gekennzeichnet****,** daß die Verstreckung der Stränge (3) erfolgt, während diese längs einer Temperierstrecke, die als ein von Gas, insbesondere Luft, beaufschlagtes Fluidbett (1) ausgebildet ist, unter Kompaktierung bis zum teigigen Zustand sanft gekühlt und der Zugwirkung des Einzugs der im wesentlichen durchgehärteten Stränge ausgesetzt werden.

2. Verfahren nach Anspruch 1, **dadurch gekennzeichnet,** daß die Temperatur des Gases so eingestellt ist, daß beim Kompaktieren keine Hohlräume, insbesondere Vakuolen, entstehen.

3. Verfahren nach Anspruch 1 oder 2, **dadurch gekennzeichnet,** daß die Länge des Fluidbettes (1) so gewählt ist, daß an ihrem Ende die Temperatur der Stränge (3) im Bereich ihres Vicat-Erweichungspunktes liegt.

## Claims

1. Method for cooling and granulating molten strands (3) extruded from dies (4) which are first subjected to first cooling and stretched in the region downstream of the dies and are then quenched by cooling water in an intensive cooling section and substantially cured for subsequent granulation, characterised in that the strands (3) are stretched while the latter are cooled gently to a doughy state with compaction and subjected to the pulling action of the feeding of the substantially cured strands along a constant-temperature section in the form of a fluidised bed (1) driven by gas, in particular air.

2. Method according to claim 1, characterised in that the temperature of the gas is set in such a manner that no cavities, in particular vacuoles are produced during compaction.

3. Method according to claim 1 or claim 2, characterised in that the length of the fluidised bed (1) is selected in such a manner that the temperature of the strands (3) is in the region of their Vicat softening point at its end.

## Revendications

1. Procédé pour refroidir et granuler des fils (3) sortant, en fusion, de filières (4), selon lequel on soumet d'abord les fils, dans la zone située après les filières, à un premier refroidissement et à un étirement et on les trempe ensuite dans une section de refroidissement intensif par eau de refroidissement en les rendant globalement trempés à coeur pour la granulation ultérieure, **caractérisé en ce que** l'étirement des fils (3) s'effectue pendant que ceux-ci, le long d'une section tempérée qui est conçue comme un lit fluidisé (1) alimenté en gaz, notamment en air, sont doucement refroidis en se compactant jusqu'à atteindre un état pâteux et sont soumis à la tension exercée par l'introduction des fils globalement trempés à coeur dans la suite du dispositif.

2. Procédé selon la revendication 1, **caractérisé en ce que** l'on règle la température du gaz de telle sorte qu'il ne se produit pas de vides, notamment de vacuoles, lors du compactage.

3. Procédé selon la revendication 1 ou 2, **caractérisé en ce que** l'on choisit la longueur du lit fluidisé (1) de telle sorte que, à son extrémité, la température des fils (3) est proche du point de ramollissement de Vicat.
